# EUROPÄISCHE PATENTSCHRIFT

(11) **EP 1 197 746 B1**
(45) Veröffentlichungstag und Bekanntmachung des Hinweises auf die Patenterteilung: **02.05.2002**
(21) Anmeldenummer: 01100220.1
(22) Anmeldetag: 02.01.2001
(51) Int. Cl.: G01N 22/00, A24D 3/02

(54) **Verfahren und Vorrichtung zur Messung des Triacetingehalts in Filtersträngen**
Method and apparatus for measuring the triacetin content in filter rods
Méthode et dispositif de détermination du contenu en triacétine d'embouts filtres

(43) Veröffentlichungstag der Anmeldung: 17.04.2002
(73) Patentinhaber: TEWS ELEKTRONIK Dipl.-Ing. Manfred Tews, 22459 Hamburg (DE)
(72) Erfinder: Herrmann, Rainer, Dipl.-Phys., 20253 Hamburg (DE)
(74) Vertreter: Glawe, Delfs, Moll & Partner

(56) Entgegenhaltungen:
- EP-A- 0 468 023
- EP-A- 0 889 321
- EP-A- 0 908 718
- DE-A- 2 815 025
- US-A- 4 776 355
- SAMIOS E ET AL: "Preparation, characterization and biodegradation studies on cellulose acetates with varying degrees of substitution" POLYMER,GB,ELSEVIER SCIENCE PUBLISHERS B.V, Bd. 38, Nr. 12, 1. Juni 1997 (1997-06-01), Seiten 3045-3054, XP004063986 ISSN: 0032-3861

## Beschreibung

Die Erfindung betrifft ein Verfahren und eine Vorrichtung zum Bestimmen des Triacetingehaltes in Filtersträngen für Zigaretten während der Herstellung der Filterstränge aus einem Filtertow aus insbesondere Zellulose-Acetat.

Filter von Zigaretten bestehen im allgemeinen aus Zellulose-Acetat und weisen Triacetin auf, und zwar typischerweise von ungefähr 8 Gew.-%. Das Triacetin ist dabei wesentlich für die Filterwirkung.

Derzeit existiert keinerlei zuverlässige Möglichkeit On-Line bei der Filterherstellung den Triacetingehalt zu messen oder gar zu regeln. Deshalb behelfen sich die Filterhersteller i.a. mit einem Laborverfahren, indem Filterproben mit und ohne Triacetin dem Prozeß entnommen und Off-Line durch Gewichtsmessung verglichen werden. Die Folge ist, daß bei plötzlichem Stoppen des Auftrages mit Triacetin (z.B. bei leerem Behälter, Klemmen eines Magnetventils etc.) dies meist erst bei der nächsten Off-Line-Laborkontrolle bemerkt wird. Wird aber ein Filterstrang ohne genügenden Triacetinauftrag produziert, verschlechtert sich die Filterwirkung derart, daß die gesundheitsfördenden Maßnahmen des Filters ausbleiben. Wird der Schaden nicht rechtzeitig bemerkt, müssen viele Millionen bereits produzierter und oft bereits verpackter Zigaretten wieder aufgerissen und in die Produktion zurückgeführt werden. Neben dem Tabak ist das Filtermaterial das teuerste Ausgangsmaterial. Das Filtermaterial kann nicht recykliert werden. Es entstehen so beträchtliche Kosten.

Bisherige Versuche mit anderen physikalischen Methoden die Filtermasse zu messen und den Triacetinauftrag zu regeln führten zu keinem Erfolg. So ist es bekannt, die Filtermasse am Strang mit Hilfe eines radioaktiven Beta-Strahlers und -Detektors zu erfassen (DE 28 15 025 A). Durch die zu geringe Wechselwirkung zwischen der leichten Masse des Filterstranges und dem Beta-Strahl sowie durch die Einschränkung, nur ein Dämpfungssignal der Elektronen zu detektieren, ist dabei aber die Meßgenauigkeit bei gleichzeitigen Schwankungen des Feuchte-, Filtertow- und Triacetingehaltes zu klein, um eine vernünftige Gewichts- oder Triacetinregelung zu erreichen. Eine in den 90er Jahren entwickelte Methode zur Nutzung von Infrarot-Absorptionslinien des Triacetins zur Triacetinbestimmung brachte keine genügenden Genauigkeiten, weil die Nah-Infrarot-Absorptionsmethode als optisches Meßverfahren nur eine Oberflächen-Meßmethode ist und nur wenige Wellenlängen, d.h. wenige Mikrometer in das Produkt eindringen kann. Auch die Messung des Triacetinanteils nach dem Messer hinter dem Filter-Maker senkrecht zur Schnittkante der Filterstäbe konnte diesen grundlegenden Mangel der IR-Methode nicht ausgleichen (Gerät der Kooperation von Moisture-Systems, Hopkinton und Celanese, Charlotte, USA). Gleichzeitig wird so nur noch ein winziger Teil des Produktes innerhalb des NIR-Meßstrahls und innerhalb der Eindringtiefe erfaßt.

Die Aufgabe der Erfindung besteht in der Schaffung eines zuverlässigen und empfindlichen Verfahrens und einer entsprechenden Vorrichtung zum Bestimmen des Trisacetingehalts in Filtersträngen während der Herstellung dieser Filterstränge.

Die erfindungsgemäße Lösung besteht darin, daß mit Hochfrequenzmeßverfahren die Verschiebung und Verbreiterung der Resonanzkurve eines Resonators durch Filtermaterial vor und nach Zugabe von Triacetin und daraus der Triacetingehalt bestimmt wird. Unter "Hochfrequenz" werden hier nicht nur Radiofrequenz, sondern auch Höchst- und Mikrowellenfrequenzen verstanden.

Die Messung erfolgt also nicht mit Beta-Strahlen, die nur verhältnismäßig geringe Wechselwirkung mit dem Material haben und dazu eine negative Werbewirkung haben könnten, da der Konsument wegen nur ungenauer Vorstellungen über die Wirkung von radioaktiven Strahlen verschreckt werden könnte. Es wird vielmehr Hochfrequenz verwendet, die eine wesentlich größere Wechselwirkung mit dem Filtermaterial und darin enthaltenem Triacetin hat als Beta-Strahlen. Andererseits durchdringt die Hochfrequenz auch das ganze Material, so daß nicht nur wie bei den erwähnten Infrarot-Messungen nur ein Oberflächenbereich erfaßt wird.

Die Messung von Masse und Feuchte von Materialien mit Hilfe von Hochfrequenz, insbesondere Mikrowellen ist bekannt (EP 0 468 023 B1, EP 0 889 321 A1, EP 0 908 718 A1). Diese bekannten Verfahren und Vorrichtungen der Anmelderin sind aber nur Beispiele. Selbstverständlich kann man Masse und Feuchtigkeit auch mit abgewandelten Verfahren messen, indem z. B. die Resonanzkurven oder ausgewählte Punkte dieser Resonanzkurven auf andere Weisen gemessen werden, um das Ergebnis zu erhalten. Auch die Vorrichtungen können selbstverständlich eine andere Form annehmen, als dies im genannten Stand der Technik beschrieben ist. Ganz allgemein können beliebige Hochfrequenz-Meßverfahren verwendet werden, mit denen Masse und Feuchte bestimmt werden können.

Erfindungsgemäß wurde nun herausgefunden, daß nicht nur die Feuchte (Wassergehalt) wie beim Stand der Technik bestimmt werden kann, sondern auch der Triacetingehalt. Die gleiche Menge Wasser und Triacetin haben zwar unterschiedlichen Einfluß auf die Verschiebung der Resonanzfrequenz und die Verbreiterung der Resonanzkurve. Trotzdem kann aber überraschenderweise durch diese Verschiebung und Verbreiterung der Resonanzkurve auch der Triacetingehalt mit Hilfe entsprechender Eichmessungen bestimmt werden. Zu diesem Zweck wird der Einfluß des mit Triacetin versehenen Filterstrangs auf Verschiebung und Verbreiterung der Resonanzkurve bestimmt und dann durch Labormessung des Triacetingehalts geeicht. Dabei ergibt sich z. B. für die Verschiebung der Resonanzfrequenz ein linearer Zusammenhang mit dem Triacetingehalt, und zwar im wesentlichen unabhängig von der konkreten Maschine (Filter-Maker), auf der der Filterstrang hergestellt wird, unabhängig vom speziell gewählten Filtertow-Material, unabhängig von der Methode des Auftragens von Triacetin, unabhängig von der Stranggeschwindigkeit, mit der der Filterstrang hergestellt wird, und auch unabhängig von der ursprünglichen Feuchte des Materials bzw. der Endfeuchte. Dies ist wesentlich, da bei einer niedrigeren Stranggeschwindigkeit eine niedrigere Endfeuchte durch Austrocknung bei der Produktion in der Maschine erzielt wird.

Ein Mikrowellenresonator, der so konstruiert ist, daß eine genügend große Wechselwirkung zwischen dem Mikrowellenfeld im Resonator und dem Filterstrang existiert (EP 0 889 321 A1), erfährt durch das Filterstrangmaterial eine Resonanzfrequenz-Verstimmung, die mit zunehmendem Triacetingehalt, aber auch mit zunehmender Filtertow-Masse und mit zunehmender Feuchte zunimmt. Der Triacetingehalt kann dabei dadurch bestimmt werden, daß die Resonanzfrequenzverstimmung von mit Triacetin versehenem Filterstrang gegenüber einem Filterstrang bestimmt wird, der nicht mit Triacetin versehen ist.

Ein besonders zweckmäßiges Verfahren der Erfindung, das nur einen Mikrowellensensor erfordert, zeichnet sich dadurch aus, daß die Messungen am fertigen Filterstrang zunächst ohne Triacetinzugabe und anschließend mit Triacetinzugabe durchgeführt werden. Die Differenz der Meßwerte, insbesondere der Resonanzverschiebungen, ergibt dabei den Triacetingehalt. Man kann also zunächst einmal die Filterherstellung für z. B. 10 Sekunden ohne Triacetin vornehmen und die Resonanzverschiebung messen. Anschließend wird dann dauernd die Resonanzverschiebung gemessen, während Triacetin zugegeben wird. Der Differenzwert ergibt dann den Triacetingehalt. Da sich die Masse des Filtermaterials oder die ursprüngliche Feuchte desselben mit der Zeit ändern könnten, könnte sich ein falscher Triacetinwert ergeben. Um dies zu vermeiden, wird man nach einer gewissen Zeit von z. B. 30 Minuten erneut eine Referenzmessung ohne Triacetinzugabe durchführen, um inzwischen eingetretene Änderungen zu berücksichtigen.

Bei einer anderen vorteilhaften Ausführungsform wird man Masse und Feuchtigkeit des zugeführten Filtertow-Materials mit einem zweiten Sensor an einer Stelle messen, an der noch kein Triacetin zugegeben ist. Aufgrund der bekannten Geometrie und dem Verhältnis der Geschwindigkeiten, mit denen Filtertow in die Maschine eintritt und der Filterstrang aus dieser heraustritt, kann dann die Masse bzw. Dichte des Filterstrangs bestimmt werden, die dieser ohne Triacetinzugabe hat. Hierbei kann dann die vorgenannte Referenzmessung am fertigen Strang entfallen und es muß dort nur noch die Messung mit zugegebenem Triacetin erfolgen. Dieses Verfahren hat den Vorteil, daß die Triacetinzugabe nicht am Anfang oder aber sogar von Zeit zu Zeit unterbrochen werden muß.

Besonders vorteilhaft ist es aber, wenn Messungen am Filtermaterial ohne zugegebenes Triacetin an beiden Meßstellen vor und hinter der Zugabestelle des Triacetins vorgenommen werden. Es werden also die beiden Meßverfahren kombiniert. Dabei kann zwischen zwei Eichungen, in denen ein Filterstrang ohne Triacetin hergestellt wird, durch Messen von Änderungen in der Eingangsdichte oder Eingangsfeuchte des Filtertows eine Korrektur bei dem Wert für die Masse des fertigen Stranges ohne Triacetin durchgeführt werden. So könnte man z. B. feststellen, daß bei einem Anwachsen der Eingangsfeuchtigkeit von 3 % die Ausgangsfeuchtigkeit auch um 3 % oder aber vielleicht auch um einen kleineren Wert von nur 2,5 % ansteigt. Dies sind alles Größen, die empirisch herausgefunden werden können und bei der Korrektur des Grundwertes des Filterstrangs ohne Triacetin berücksichtigt werden können.

Vorteilhafterweise werden die Messungen mit Hochfrequenz von 10 MHz bis 30 GHz vorgenommen. Noch vorteilhafter sind Frequenzen zwischen 100 MHz bis 20 GHz oder aber 500 MHz bis 15 GHz. Ganz besonders vorteilhaft insbesondere auch wegen der Größe der messenden Filterstränge sind Mikrowellen.

Die Meßergebnisse können bei einer bevorzugten Ausführungsform dazu verwendet werden, die Triacetinzugabe zu regeln. Dadurch kann einerseits verhindert werden, daß der Triacetingehalt zu gering ist, während andererseits auch ein zu hoher Triacetingehalt, der unnötige Kosten verursacht, vermieden werden kann.

Vorteilhafterweise wird bei Unterschreiten einer Minimalmenge bzw. Überschreiten einer Maximalmenge von Triacetin eine Warnmeldung abgegeben und/oder die Vorrichtung abgeschaltet.

Eine Vorrichtung zur Durchführung des Verfahrens zeichnet sich dadurch aus, daß sie einen Vorratsbehälter für das Filtertow, eine Streckvorrichtung für das Filtertow, eine Zugabevorrichtung für das Triacetin, eine Strangformungsvorrichtung und eine Vorrichtung zum Unterteilen des Strangs in Abschnitte aufweist, wobei erfindungsgemäß ein Mikrowellensensor hinter der Strangformungsvorrichtung vorgesehen ist. Bei einer weiteren vorteilhaften Ausführungsform ist noch ein Mikrowellensensor vor der Zugabevorrichtung für das Triacetin vorgesehen.

Die Erfindung wird im folgenden anhand einer vorteilhaften Ausführungsform unter Bezugnahme auf die beigefügten Zeichnungen bspw. beschrieben. Es zeigen:
- Fig. 1: das Prinzipschaltbild einer Vorrichtung zum Herstellen des Filterstrangs (Filter-Maker);
- Fig. 2: eine typische Resonanzfrequenzverschiebung als Funktion des Triacetingehalts für verschiedene Bedingungen; und
- Fig. 3: die Abhängigkeit der Resonanzfrequenzverschiebung von der Filterstab-Masse.

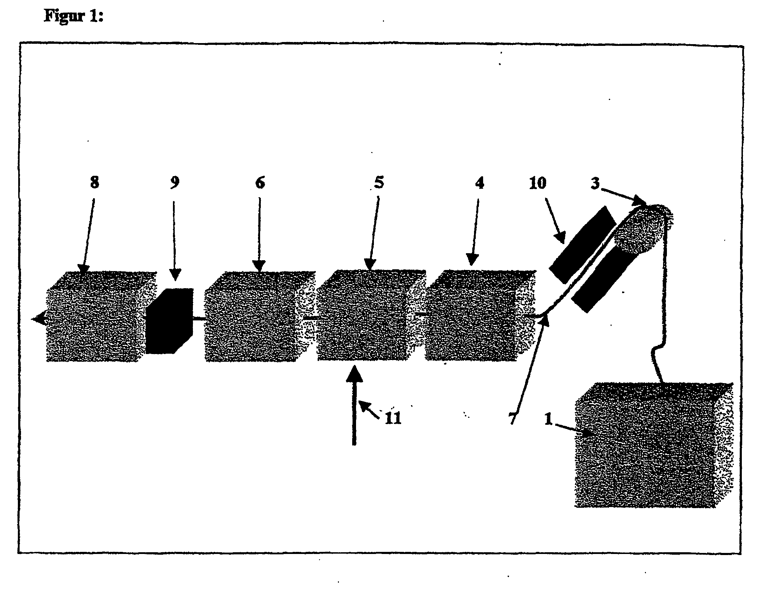

In Fig. 1 ist das Prinzip einer Maschine zur Herstellung eines Filterstrangs (Filter-Maker) gezeigt. Das Filtertow ist ein Band von Zellulose-Acetat, das in einem Filtertow-Behälter 1 angeordnet und aus diesem in Form dieses Bandes 2 entnommen wird. Bei 3 ist schematisch eine Transporteinrichtung und Umlenkeinrichtung für das Fitertow 2 gezeigt. Mit 4 ist eine Streckvorrichtung für das Filtertow bezeichnet, in der dieses für die nachfolgende Triacetin-Zugabe ausgebreitet wird. 5 ist eine Zugabevorrichtung, in der das Triacetin zugeführt wird, was durch den Pfeil 11 angedeutet wird. In der Einrichtung 6 findet Strangformung, Papierumhüllung und - klebung statt. Der so fertige mit Triacetin versehene Filterstrang 7 wird dann durch eine Messereinrichtung bei 8 in gleich lange Stücke aufgeteilt, die dann den Maschinen zur Herstellung der Filterzigaretten zugeführt werden.

Bei 9 ist ein erster Mikrowellensensor gezeigt, durch den Masse und Feuchte sowie Triacetingehalt des fertigen Filterstrangs 7 gemessen werden können. Wie erwähnt kann dabei zunächst die Masse und Feuchte ohne Triacetin und anschließend mit Triacetin bestimmt werden, um so den Triacetingehalt zu ermitteln. Bei 10 ist ein zweiter Mikrowellensensor dargestellt, durch den Masse und Feuchte des ursprünglichen Filtertow-Bands gemessen werden können.

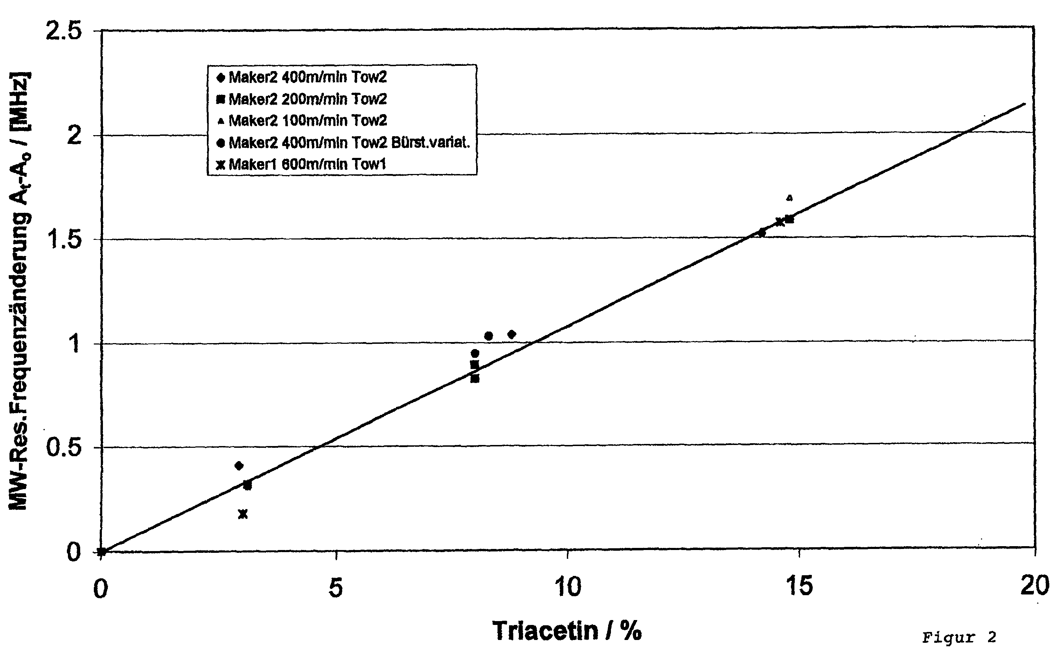

Fig. 2 zeigt die Dichtewerts-Differenz zum Zustand ohne Triacetinzugabe in Abhängigkeit von der Triacetinkonzentration bei verschiedenen Maschinen und Herstellungsverfahren. Man erkennt deutlich den linearen Zusammenhang unabhängig von der speziellen Maschine oder den Parametern der Herstellung. Die Dichtewerts-Differenz ist dabei in MHz, d. h. der Verschiebung der Resonanzfrequenz angegeben.

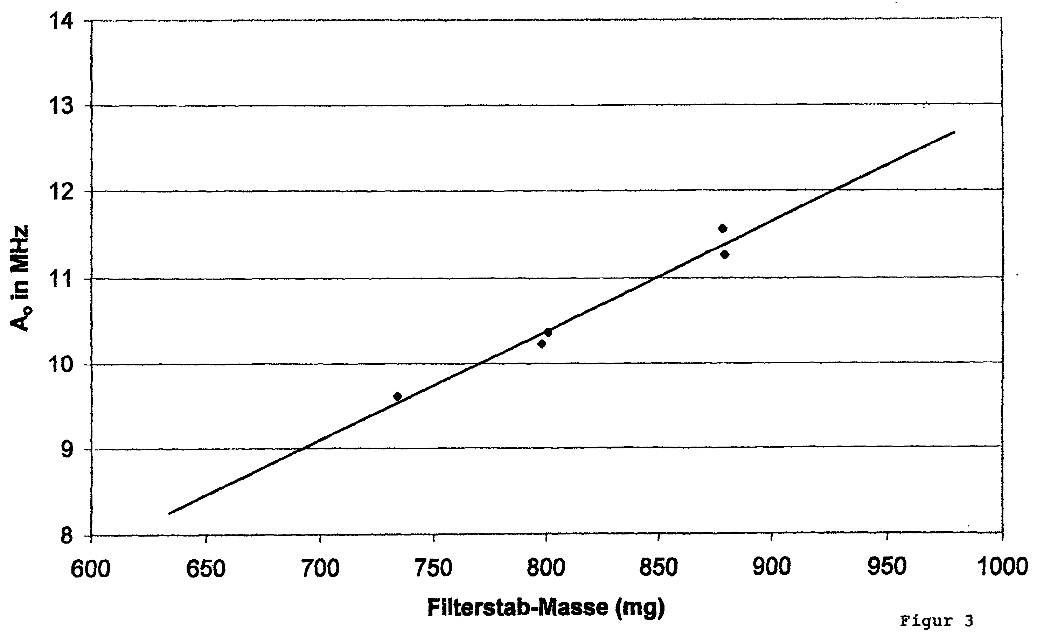

In Fig. 3 ist die Frequenzverschiebung der Resonanzfrequenz für einen Filterstab, der am Ausgang durch Unterteilen des Filterstrangs gebildet wird, ohne Triacetin in Abhängigkeit von seiner Masse gezeigt.

Mit Hilfe eines Mikrowellen-Feuchte- und -Dichtemeßgeräts des erwähnten Standes der Technik kann mit Hilfe eines für die Messung des Filterstrangs geeigneten Sensors das Massesignal (Frequenzverschiebung) Aₜ mit dem Massesignal des Filterstrangs ohne Triacetin A₀ verglichen werden. Dazu muß der Sensor in der Filterstrangmaschine am Ausgang kurz vor der Messerposition angebracht werden, wo die Strangbildung vollkommen abgeschlossen ist. Der Differenzwert beider Massesignale Aₜ - A₀ wird gegen die Triacetinmenge kalibriert, was durch Labormessungen des Gewichts geschehen kann. Diese Differenzgröße ist weitgehend unempfindlich gegenüber Änderungen des Betriebszustandes der Maschine, der Produktionsgeschwindigkeit, der Einsatzmenge von Filtertow-Material, der Auftragsart des Triacetin usw. Die Referenzgröße A₀ enthält alle Informationen über die Beschaffenheit des Filterstabes ohne Triacetin und kann zu Beginn eines neuen Produktionszyklus gemessen werden, indem ein Filterstrang für kurze Zeit zunächst ohne Triacetin produziert wird. Dabei kann auch der Feuchtewert F₀ ohne Störung durch das Triacetin erfaßt werden. Um Änderungen in der Referenzgröße zu erfassen, kann diese Prozedur in zeitlichem Abstand wiederholt werden.

Soll nur diese Art der reinen Differenzmessung durchgeführt werden, so braucht die Masse bzw. Dichte des Filterstrangs nicht bei jeder Messung absolut bestimmt werden. Diese Masse kann aber auch absolut bestimmt werden, indem zunächst eine Messung ohne Filterstrang durchgeführt wird und dann aus der Verschiebung der Resonanzfrequenz und Verbreiterung der Resonanzkurve Masse und Feuchte absolut bestimmt werden.

Bei einer vorteilhaften Ausführungsform ist noch der zweite Mikrowellensensor 10 für das Filtertow-Band 2 vorgesehen, der vorzugsweise ein Planarsensor oder Gabelresonator ist. Hier können Masse und Feuchte des Filtertow-Bandes 2 bestimmt werden. Ändern sich diese Werte während der Herstellung des Filterstrangs, so kann der Wert A₀ des Mikrowellensensors 9 nachkorrigiert werden, wodurch man eine größere Genauigkeit erhält. Dazu werden am Eingang der Maschine durch den Sensor 10 gleichzeitig die Menge M und die Feuchte F des Fasermaterials, das in die Maschine hineinläuft, gemessen. Daraus kann die Masse M₀ des trockenen Eingangsfasermaterials bestimmt werden. Die beiden Meßgrößen M₀ und F können als Basis für die Bestimmung der Referenzgröße A₀ des Mikrowellensensors 9 am Ausgang der Filtermaschine dienen, da bei bekannten Werten für die Verdichtung des Fasermaterials (d. h. dem Verhältnis der Geschwindigkeiten des Strangs am Eingang und am Ausgang als bekannte Maschinendaten) A₀ eine kalibrierbare eindeutige Funktion von M₀ und F ist.

## Patentansprüche

1. Verfahren zum Bestimmen des Triacetingehaltes in Filtersträngen für Zigaretten während der Herstellung der Filterstränge aus einem Filtertow aus insbesondere Zellulose-Acetat, **dadurch gekennzeichnet, daß** man mit einem Verfahren mit hoch frequenten elektromagnetischen Feldern die Verschiebung und Verbreiterung der Resonanzkurve eines Resonators durch Filtermaterial vor und nach Zugabe von Triacetin und daraus den Triacetingehalt bestimmt.

2. Verfahren nach Anspruch 1, **dadurch gekennzeichnet, daß** die Messungen am fertigen Filterstrang zunächst ohne Triacetinzugabe und anschließend mit Triacetinzugabe durchgeführt werden.

3. Verfahren nach Anspruch 2, **dadurch gekennzeichnet, daß** nach einem vorgegebenen Zeitraum die Messung ohne Triacetinzugabe wiederholt wird.

4. verfahren nach einem der Ansprüche 1 bis 3, **dadurch gekennzeichnet, daß** Messungen am ursprünglichen Filtertow vor der Zugabestelle für Triacetin vorgenommen werden.

5. Verfahren nach einem der Ansprüche 1 bis 4, **dadurch gekennzeichnet, daß** Messungen am Filtermaterial ohne zugegebenes Triacetin an zwei Meßstellen vor und hinter der Zugabestelle des Triacetins vorgenommen werden.

6. Verfahren nach Anspruch 4 oder 5, **dadurch gekennzeichnet, daß** bei den Messungen ohne zugegebenes Triacetin die Masse und die Feuchte des Filtertows bestimmt wurden.

7. Verfahren nach einem der Ansprüche 1 bis 6, **dadurch gekennzeichnet, daß** die Messungen mit Hochfrequenz von 10 MHz bis 30 GHz vorgenommen werden.

8. Verfahren nach einem der Ansprüche 1 bis 7, **dadurch gekennzeichnet, daß** die Messungen mit Hochfrequenz von 100 MHz bis 20 GHz vorgenommen werden.

9. Verfahren nach einem der Ansprüche 1 bis 8, **dadurch gekennzeichnet, daß** die Messungen mit Hochfrequenz von 500 MHz bis 15 GHz vorgenommen werden.

10. Verfahren nach einem der Ansprüche 1 bis 9, **dadurch gekennzeichnet, daß** die Messungen mit Mikrowellen durchgeführt werden.

11. Verfahren nach einem der Ansprüche 1 bis 10, **dadurch gekennzeichnet, daß** Triacetinzugabe aufgrund der Meßergebnisse geregelt wird.

12. Verfahren nach einem der Ansprüche 1 bis 11, **dadurch gekennzeichnet, daß** bei Unterschreiten einer Minimalmenge bzw. Überschreiten einer Maximalmenge von Triacetin eine Warnmeldung abgegeben wird und/oder die Vorrichtung abgeschaltet wird.

13. Vorrichtung zur Durchführung des Verfahrens nach einem der Ansprüche 1 bis 12, die einen Vorratsbehälter (1) für das Filtertow (2), eine Streckvorrichtung (4) für das Filtertow (2), eine Zugabevorrichtung (5) für das Triacetin, eine Strangformungsvorrichtung (6) und eine Vorrichtung (8) zum Unterteilen des Stranges (7) in Abschnitte aufweist, **dadurch gekennzeichnet, daß** ein Mikrowellensensor (9) hinter der Strangformungsvorrichtung (6) vorgesehen ist.

14. Vorrichtung nach Anspruch 13, **dadurch gekennzeichnet, daß** ein weiterer Mikrowellensensor (10) vor der Zugabevorrichtung (5) für das Triacetin vorgesehen ist.

## Claims

1. Method for determining the triacetin content in filter plugs for cigarettes during the manufacture of the filter plugs from a filter tow consisting of, in particular, cellulose acetate, **characterised in that** by means of a method using high frequency electromagnetic fields the shift and spread of the resonance curve of a resonator through filter material is determined before and after addition of triacetin and the triacetin content is determined from this.

2. Method according to Claim 1, **characterised in that** the measurements on the finished filter plug are carried out first without the addition of triacetin and then with the addition of triacetin.

3. Method according to Claim 2, **characterised in that** the measurement without the addition of triacetin is repeated after a specified period.

4. Method according to one of Claims 1 to 3, **characterised in that** measurements on the original filter tow are carried out upstream of the feed point for triacetin.

5. Method according to one of Claims 1 to 4, **characterised in that** measurements on the filter material without added triacetin are carried out at two measurement points upstream and downstream of the feed point for triacetin.

6. Method according to Claim 4 or 5, **characterised in that** in the case of the measurements without added triacetin the mass and the moisture content of the filter tow have been (sic) determined.

7. Method according to one of Claims 1 to 6, **characterised in that** the measurements are carried out using a high frequency of 10 MHz to 30 GHz.

8. Method according to one of Claims 1 to 7, **characterised in that** the measurements are carried out using a high frequency of 100 MHz to 20 GHz.

9. Method according to one of Claims 1 to 8, **characterised in that** the measurements are carried out using a high frequency of 500 MHz to 15 GHz.

10. Method according to one of Claims 1 to 9, **characterised in that** the measurements are carried out using microwaves.

11. Method according to one of Claims 1 to 10, **characterised in that** triacetin addition is controlled on the basis of the results of the measurements.

12. Method according to one of Claims 1 to 11, **characterised in that** a warning is given and/or the equipment is switched off if the amount of triacetin is below a minimum amount or above a maximum amount.

13. Apparatus for carrying out the method according to one of Claims 1 to 12, which has a storage container (1) for the filter tow (2), a stretching device (4) for the filter tow (2), a feed device (5) for the triacetin, a plug-forming device (6) and a device (8) for dividing the plug (7) into portions, **characterised in that** a microwave sensor (9) is provided downstream of the plug-forming device (6).

14. Apparatus according to Claim 13, **characterised in that** a further microwave sensor (10) is provided upstream of the feed device (5) for the triacetin.

## Revendications

1. Procédé de détermination de la teneur en triacétine dans les boudins de filtre pour cigarettes pendant la fabrication des boudins de filtre à partir d'une garniture filtrante réalisée en particulier en acétate de cellulose, **caractérisé en ce que**, au moyen d'un procédé avec des champs électromagnétiques à haute fréquence, l'on détermine le décalage et l'élargissement de la courbe de résonance d'un résonateur à travers un matériau filtrant avant et après l'addition de triacétine et, à partir de là, la teneur en triacétine.

2. Procédé selon la revendication 1, **caractérisé en ce que** les mesures sur le boudin de filtre fini sont d'abord effectuées sans addition de triacétine et ensuite avec addition de triacétine.

3. Procédé selon la revendication 2, **caractérisé en ce que** la mesure sans addition de triacétine est répétée après un intervalle de temps prédéterminé.

4. Procédé selon l'une des revendications 1 à 3, **caractérisé en ce que** des mesures sont effectuées sur la garniture filtrante initiale avant le poste d'addition de la triacétine.

5. Procédé selon l'une des revendications 1 à 4, **caractérisé en ce que** les mesures sont effectuées sur le matériau filtrant sans triacétine ajoutée en deux points de mesure en amont et en aval du poste d'addition de la triacétine.

6. Procédé selon la revendication 4 ou 5, **caractérisé en ce que**, pendant les processus de mesure sans triacétine ajoutée, on a déterminé la masse et l'humidité de la garniture filtrante.

7. Procédé selon l'une des revendications 1 à 6, **caractérisé en ce que** les mesures sont effectuées à haute fréquence de 10 MHz à 30 GHz.

8. Procédé selon l'une des revendications 1 à 7, **caractérisé en ce que** les mesures sont effectuées à haute fréquence de 100 MHz à 20 GHz.

9. Procédé selon l'une des revendications 1 à 8, **caractérisé en ce que** les mesures sont effectuées à haute fréquence de 500 MHz à 15 GHz.

10. Procédé selon l'une des revendications 1 à 9, **caractérisé en ce que** les mesures sont effectuées avec des micro-ondes.

11. Procédé selon l'une des revendications 1 à 10, **caractérisé en ce que** l'addition de triacétine est régulée en fonction des résultats des mesures.

12. Procédé selon l'une des revendications 1 à 11, **caractérisé en ce que**, en présence d'une quantité de triacétine inférieure à une quantité minimale ou supérieure à une quantité maximale, un signal d'alarme est émis et/ou le dispositif est arrêté.

13. Dispositif destiné à la mise en oeuvre du procédé selon l'une des revendications 1 à 12, comprenant un récipient de stockage (1) de la garniture filtrante (2), une unité d'étirage (4) de la garniture filtrante (2), une unité d'addition (5) pour la triacétine, une unité de formage des boudins de filtre (6) et une unité (8) destinée à sectionner le boudin (7) en bouts filtrants, **caractérisé en ce qu'**un capteur à micro-ondes (9) est prévu en aval de l'unité de formage des boudins de filtre (6).

14. Dispositif selon la revendication 13, **caractérisé en ce qu'**un capteur à micro-ondes (10) supplémentaire est prévu en amont de l'unité d'addition (5) de la triacétine.
